# EUROPÄISCHE PATENTANMELDUNG

(11) **EP 1 902 811 A1**
(43) Veröffentlichungstag der Anmeldung: **26.03.2008**
(21) Anmeldenummer: 07017862.9
(22) Anmeldetag: 12.09.2007
(51) Int. Cl.: B23K 20/12, B23K 20/16, B23K 20/227, B23K 103/20

(54) **Verbindung eines einen galvanischen Überzug aus Aluminium aufweisenden Befestigungselements aus Stahl mit einem flächigen Bauteil aus Aluminium**

(30) Priorität: 20.09.2006 DE 102006044379
(71) Anmelder: EJOT GmbH & Co. KG, 57334 Bad Laasphe (DE)
(72) Erfinder: Christ, Eberhard, Dr., 99897 Tambach-Dietharz (DE); Pinzl, Wilfried, Dr., 99897 Tambach-Dietharz (DE)
(74) Vertreter: Bardehle, Heinz

(57) **Zusammenfassung**

Die Erfindung bezieht sich auf eine Verbindung eines rotationssymmetrischen Befestigungselements (1) aus Stahl mit einem flächigen Bauteil (8) aus Aluminium. Das Befestigungselement (1) ist mit einem galvanischen Überzug aus Aluminium versehen und bildet an seinem dem Bauteil (8) zugewandten Ende (4) einen Kegel mit einem Kegelwinkel von mindestens α = 174°, der durch Rotation und Andrücken an das Bauteil (4) mit diesem oberflächlich über eine Reibschweißzone (7) verbunden ist.

## Beschreibung

Die Erfindung bezieht sich auf eine Verbindung eines rotationssymmetrischen Befestigungselements aus Stahl mit einem flächigen Bauteil aus Aluminium, wie eine solche im Zusammenhang mit einem Mehrkörperverbund in der DE 196 20 814 A1 dargestellt ist. In dieser Druckschrift wird ein Verfahren zum Herstellen dieses Mehrkörperverbundes beschrieben, bei dem zwei flächige, aufeinander liegende Bauteile aus Aluminium mittels eines aus Stahl bestehenden Verbindungskörpers durch einen Reibschweißvorgang miteinander verbunden werden. Der Verbindungskörper dringt dabei durch das obere der beiden aufeinander liegenden Bauteile hindurch und verbindet sich mit dem unteren Bauteil über eine sich an der Stirnseite des Verbindungskörpers ausbildende Reibschweißzone. Der Verbindungskörper besitzt hierzu an seiner Stirnseite einen Kegel, dessen Mantel mit Rücksicht auf die notwendige Durchdringung des oberen Bauteils einen Kegelwinkel zwischen 5° und 10°, insbesondere 7° aufweist und dessen Wirkung noch durch radial verlaufende Rillungen mit sägezahnförmigem Querschnitt unterstützt wird.

Mit der Verbindung von Stahl und Aluminium beschäftigt sich ebenfalls die DE-OS 2 126 596. In dieser Druckschrift wird zunächst ein älteres bekanntes Verfahren beschrieben, wonach einem Aluminiumteil z.B. auf galvanischem Wege eine Aluminiumschicht aufgebracht wird, woraufhin das so behandelte Teil mit einem anderen Bauteil aus Aluminium verschweißt wird. Einerseits wird dabei das Aufbringen der Aluminiumschicht auf galvanischem Wege als nachteilig wegen verminderter Festigkeitswerte hingestellt, andererseits wird über die Durchführung des eigentlichen Schweißvorganges nichts näheres ausgesagt, so dass dieser Stand der Technik nur eine unergiebige Lehre enthält.

Ein weiterer Hinweis auf das Verschweißen von Aluminiumgusskörpern mit Nicht-Aluminium-Metallkörpern, z.B. aus Stahl, ist in der DE-AS-27 52 584 beschrieben. Danach sollen zwei Schweißvorgänge nacheinander durchgeführt werden, nämlich ein erster Schweißvorgang in Form von Explosiv-Schweißen zur Erzeugung einer Aluminiumschicht auf dem Nicht-Aluminium-Metallkörper und danach ein zweiter Schweißvorgang zur Verbindung der beiden Körper, wobei auch Reibschweißen erwähnt wird, ohne dass jedoch über diesen Schweißvorgang hinsichtlich seiner konkreten Durchführung irgendetwas in der Druckschrift offenbart wird. Insbesondere wegen der Notwendigkeit der Durchführung zweier aufeinander folgender Schweißvorgänge kommt dieses bekannte Verfahren jedenfalls für eine schnelle automatische Fabrikation nicht in Frage.

Bekanntlich sind Verbindungen von Bauteilen einerseits aus Stahl und andererseits aus Aluminium durch Reibschweißen darum nur schwierig herstellbar, weil das Reibschweißen mindestens ein Plastifizieren der beiden Materialien erfordert, wobei in den Plastifiziervorgang auch Stahl mit seinem gegenüber Aluminium wesentlich höheren Schmelzpunkt einzubeziehen ist.

Mit der vorliegenden Erfindung wird ein anderer, spezieller Weg zur Verbindung eines rotationssymmetrischen Befestigungselements aus Stahl mit einem flächigen Bauteil aus Aluminium beschritten, der auf einem Reibschweißvorgang beruht. Dem liegt die Aufgabe zugrunde, das Befestigungselement so vorzubereiten und zu gestalten, dass das rotationssymmetrische Befestigungselement aus Stahl an einem flächigen Bauteil aus Aluminium sich fabrikatorisch in einfacher Weise anbringen lässt.

Gelöst wird die Aufgabe dadurch, dass das Befestigungselement mit einem galvanischen Überzug aus Aluminium versehen ist und an seinem dem Bauteil zugewandten Ende einen Kegel mit einem Kegelwinkel von mindestens α = 174° bildet, der durch Rotation und Andrücken an das Bauteil mit diesem oberflächlich über eine Reibschweißzone verbunden ist.

Die Lösung des Problems besteht im Wesentlichen also darin, dem Befestigungselement aus Stahl einen galvanischen Überzug aus Aluminium zu geben, der naturgemäß zusammen mit dem aus Aluminium bestehenden Bauteil bei dem Reibschweißvorgang problemlos plastifiziert und gegebenenfalls auch aufgeschmolzen werden kann, wobei, wie die Erfahrung gezeigt hat, das mindestens plastifizierte Aluminium im Bereich seines Übergangs zum Stahl des Befestigungselements in dieses hineindiffundiert und damit einen Übergangsbereich bildet, der vom Aluminium des Befestigungselementes über die Reibschweißzone im Bereich des Aluminiumüberzuges in das Befestigungselement aus Stahl hinein reicht, womit eine sichere Reibschweißverbindung geschaffen ist, die im Rahmen einer automatisierten Fabrikation schnell und problemlos herstellbar ist. Dabei liefert der Aluminiumüberzug darüber hinaus noch den Vorteil, dass dieser einen Korrosionsschutz für das Befestigungselement bildet, so dass dieses auch insbesondere gegen Feuchtigkeit geschützt ist, die sonst zu einem Rosten des Befestigungselementes führen würde.

In den Figuren ist ein Ausführungsbeispiel der Erfindung dargestellt. Es zeigen:
- Figur 1: das als Bolzen ausgebildete Befestigungselement in perspektivischer Darstellung;
- Figur 2: das Befestigungselement im Schnitt gemäß Linie II-II aus Figur 1;
- Figur 3: das gleiche Befestigungselement, durch eine Reibschweißzone verbunden mit einer Platte;
- Figur 4: das als Mutter ausgebildete Befestigungselement.

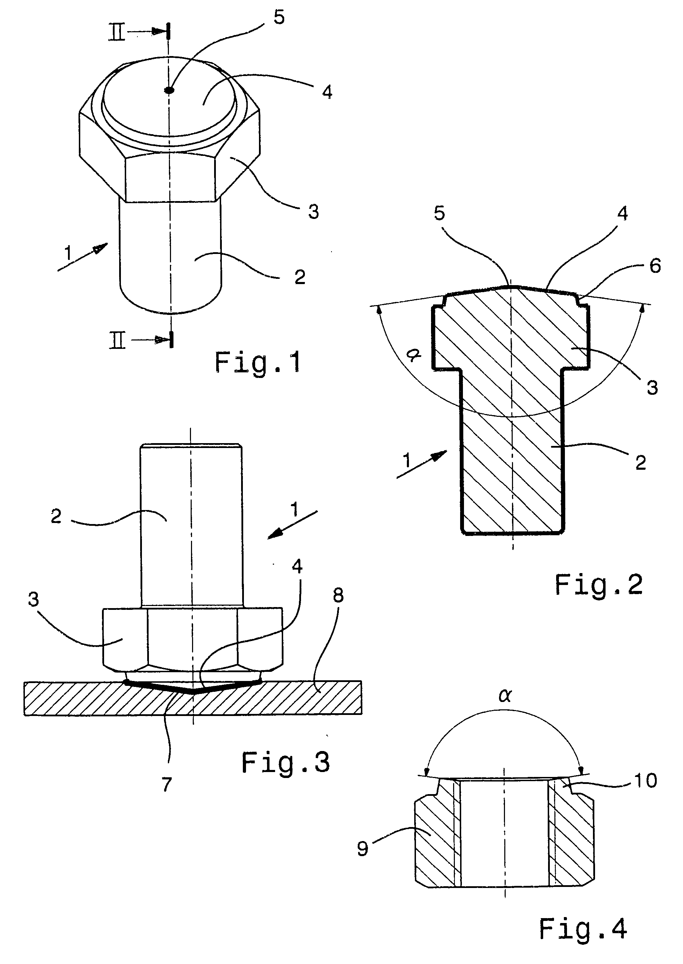

In der Figur 1 ist der Stahlbolzen 1 in perspektivischer Darstellung wiedergegeben, der den Schaft 2 und den Flansch 3 aufweist. Der Flansch 3 besitzt eine Sechskant-Kontur, mit der er in ein Werkzeug eingespannt werden kann, das den Bolzen 1 zum Reibschweißen in bekannter Weise in Drehung versetzt. Die Stirnfläche 4 des Bolzens 1 wird von einem Kegel gebildet, dessen Spitze mit dem Punkt 5 zusammen fällt. Der Kegelwinkel beträgt hier 174°, wie dies in Figur 2 verdeutlicht ist.

In der Figur 2 ist der Bolzen im Schnitt dargestellt. Die Figur 2 zeigt deutlich die Ausbildung der Stirnfläche 4 als Kegel mit der Kegelspitze 5. Der Kegel bildet einen Kegelwinkel von α = 174°. Beim Aufsetzen des Bolzens 1 auf ein flaches Bauteil kommt zuerst der Bolzen 1 mit seiner Spitze 5 in Berührung mit dem flächigen Bauteil, von wo aus dann sich eine Reibschweißzone radial nach außen hin ausbreitet, bis diese den Rand 6 des Flansches 3 erreicht. Der galvanisch aufgebrachte Überzug aus Aluminium ist in Figur 2 durch die verstärkte Linienführung der Außenkontur dargestellt.

Figur 3 zeigt den Bolzen 1, der über die Reibschweißzone 7 mit der aus Aluminium bestehenden Platte 8 verbunden ist. Wie ersichtlich, besteht die Verbindung von Bolzen 1 über den Flansch 4 mit der Platte 8 nur über die Reibschweißzone 7, die sich oberflächlich sowohl über die Stirnseite 4 des Flansches 3 und die Oberfläche des Bauteils 8 erstreckt.

Aufgrund des Überzuges des Bolzens 1 aus Aluminium ergibt sich beim Reibschweißen zunächst eine Plastifizierung an den sich berührenden Oberflächen der Stirnfläche 4 und Bauteil 8, womit sich das Aluminium des Überzuges mit dem Aluminium der Platte 8 verbindet. Dabei dringt das plastifizierte und gegebenenfalls geschmolzene Aluminium auch in das Material des Stahlbolzens 1 ein, womit eine echte durchgehende metallische Verbindung zwischen Platte 8 und Bolzen 1 hergestellt ist. Dabei spielt neben dem Aluminiumüberzug des von dem Bolzen 1 repräsentierten Bauteils auch der besonders geringe Kegelwinkel α der Stirnseite 4 des Bolzens eine entscheidende Rolle, da die Stirnseite mit ihrem zentralen Punkt 5 zunächst mit der Platte 8 beim Reibschweißen in Berührung gerät, wo sich aufgrund der stark begrenzten Berührungsfläche schnell eine relativ hohe Temperatur bei entsprechender Rotation des Bolzens 1 einstellt mit der Folge, dass sich der den Punkt 5 umgebende mittlere Bereich des Flansches 3 schnell bis zur Plastifizierung und darüber hinaus erwärmt, so dass in Anbetracht des geringen Kegelwinkels sehr schnell weitere nach außen gerückte Bereiche der Stirnseite 4 des Flansches 3 mit der Oberfläche der Platte 8 in Berührung geraten. Dabei bildet sich schließlich im Effekt eine rein flächige, oberflächliche Berührung über die gesamte Stirnseite 4 des Flansches 3 aus mit der Folge, dass die gesamte Stirnseite 4 zur Reibschweißzone 7 mit der Platte 8 wird.

Bei dem in der Figur 4 dargestellten Befestigungselement handelt es sich um eine mit einem Aluminiumüberzug versehene Mutter 9 aus Stahl, die auf ihrer einen Seite mit dem Ringvorsprung 10 versehen ist, dessen Stirnseite gemäß der Oberfläche eines Kegel mit einem Winkel von α = 174° gestaltet ist. Diese Stirnseite bildet dann die Reibschweißverbindung zu einem flächigen Bauteil aus Aluminium, wobei wegen der Gestaltung des Bauteils als Mutter 9 bei deren Aufsetzen auf das Bauteil die Berührung zu diesem über die ringförmige Außenkante des Vorsprungs 10 erfolgt (was im Prinzip der punktförmigen Anfangsberührung des Bolzens 1 und eines Bauteils 8 gemäß Darstellung in Figur 3 entspricht). Beim Aufsetzen der Mutter 9 auf ein Bauteil spielt sich sodann im Prinzip der gleiche Vorgang des Reibschweißens ab, wie er im Zusammenhang mit der Figur 3 oben beschrieben ist, wodurch gezeigt ist, dass durch Erfindung nicht nur ein als Bolzen ausgebildetes Befestigungselement aus Stahl, sondern auch ein als Mutter ausgebildetes Befestigungselement aus Stahl mit einer Platte aus Aluminium durch Reibschweißen verbindbar ist. Der auf die Mutter 9 aufgebrachte Überzug aus Aluminium wirkt sich dabei in gleicher Weise aus, wie dies im Zusammenhang mit dem Bolzen 1 zu Figur 3 beschrieben ist.

## Patentansprüche

1. Verbindung eines rotationssymmetrischen Befestigungselements (1, 9) aus Stahl mit einem flächigen Bauteil (8) aus Aluminium, **dadurch gekennzeichnet, dass** das Befestigungselement (1, 9) mit einem galvanischen Überzug aus Aluminium versehen ist und an seinem dem Bauteil zugewandten Ende einen Kegel mit einem Kegelwinkel von mindestens α = 174° bildet, der durch Rotation und Andrücken an das Bauteil (8) mit diesem oberflächlich über eine Reibschweißzone (7) verbunden ist.
